# EUROPEAN PATENT SPECIFICATION

(11) **EP 4 379 205 B1**
(45) Date of publication and mention of the grant of the patent: **09.07.2025**
(21) Application number: 21951728.1
(22) Date of filing: 29.07.2021
(51) Int. Cl.: F03D 1/06

(54) **TRANSITION OF VARIABLE THICKNESSES OF COMPOSITE MATERIAL LAMINATES OF A MODULAR BLADE**
ÜBERGANG VON VERBUNDMATERIALLAMINATEN MIT VARIABLER DICKE EINER MODULAREN SCHAUFEL
TRANSITION D?ÉPAISSEURS VARIABLES DE STRATIFIÉS D?UN MATÉRIAU COMPOSITE D?UNE PALE MODULAIRE

(43) Date of publication of application: 05.06.2024
(73) Proprietor: Nabrawind Technologies, S.L., 31002 Pamplona (ES)
(72) Inventor: CALLEN ESCARTÍN, Javier, 22005 Huesca (ES); SANZ PASCUAL, Eneko, 31002 Pamplona (ES); MONREAL LESMES, Javier, 31180 Zizur Mayor (ES); MAYOR MORENO, Luis Alberto, 28026 Madrid (ES)
(74) Representative: Ezcurra Zufia, Maria Antonia
(86) International application number: PCT/ES2021/070579
(87) International publication number: WO 2023/007038

(56) References cited:
- EP-A1- 3 549 752
- CN-A- 111 094 740
- US-A1- 2014 271 217
- US-A1- 2014 271 217
- US-A1- 2016 312 762
- US-A1- 2018 051 672
- US-A1- 2018 171 968
- US-A1- 2021 086 463
- US-B2- 8 500 409

## Description

### Field of invention

The invention is included within the field of parts used in a modular blade, and more specifically, the solution provided to the eccentricity produced due to the increase in thickness of the beam flange (cap) necessary to house inserts or joining elements that do not fit in the original cap.

### Background

The modular connection of a blade made of laminated composite material includes a thickening in the joining area where the metal elements that form part of the connection of the blade are housed. The thickness of this joining area is very large to accommodate these elements and it decreases to complete its transition with the cap of the original blade, which is thinner. A transition occurs between a "thin" laminate belonging to the cap to a "thick" laminate belonging to the joint, which produces an eccentricity in the load of said transition.

Thickness changes can occur in different composite material structures and their transitions are made with typical slopes of 1:100. **In** this way, the eccentricity of the load causes a small moment and certain secondary reactions transverse to the plane of the laminate. However, being generally of small magnitude, these secondary loads can be supported by the laminate itself over the length resulting from its slope. (State of the art).

The only application where the change in thickness is as relevant as in a modular blade is in the root joints of wind blades. However, the roots have a closed section and, therefore, the effects produced by the eccentricity that causes said change in thickness are mitigated for two reasons: the great width of the joint that ends up covering the entire perimeter of the circular section of the bearing and the circular closure of the section that also allows the out-of-plane movements caused by the eccentricity of the load to react.

Patent WO2019036270 describes the joining of a staggered spar cap between two modules. It presents various solutions providing an inclination to the laminates of the joint, maintaining the continuous laminate, but ending its sheets in a bevel that as a whole presents an inclined plane or maintaining the continuous laminate by staggering the end of each sheet with respect to the adjacent sheet (being lower or higher). However, by not housing any additional insert or joining element, the change in thickness and associated eccentricity are minimal, therefore not presenting the problem faced in this new invention.

Patent WO2020086080 presents a spar cap that decreases in thickness as it gains width, presenting in the transition zone a decrease in the laminate that forms an inclined plane. However, the change in thickness seen in Fig. 7 of said patent is of a much lower magnitude and therefore its eccentricity can be addressed with typical slopes of 1:100 or similar.

Patent EP1486415 shows bushings integrated into pre-recesses in a core piece where they are housed. It is covered with strips of fiber and reinforced with more layers of fiber. Although it is a form of reinforcement to ensure the position of the metal parts, it does not seek to minimize the eccentricity produced in composite materials with steps, on which it has no impact.

Patent CN111094740A describes a method for managing the transition of variable thicknesses in composite material laminates. With the precise arrangement of fibers and the placement of resins, and using advanced manufacturing techniques, a progressive and controlled transition in the thicknesses of the blade is achieved. Patent US 2014/271217A1 describes an approach focusing on the fiber placement strategy within the laminate, with specific alignment methods. It describes the use of hybrid materials and combinations of fibers to adjust the mechanical properties according to structural needs.

Patent US 2018/171968A1 describes an advanced energy management system that integrates smart materials into a structural design to optimize performance under dynamic loads.

In the state of the art there are no such abrupt thickness changes that support the effects of such pronounced eccentricities in main load paths that, therefore, present very high stress levels.

### Description

Thickness changes can occur in different composite material structures and their transitions are made with typical slopes of 1:100. However, it is not common for a main load path to have a change in thickness of between 50 and 400% as can occur in modular blades. If the usual slopes are used in such an abrupt change in thickness, an eccentricity occurs in the centroid of the load that causes a moment and a movement outside the plane of the compound, of a magnitude much greater than the usual ones, which could cause the collapse of the structure.

At the junction of a modular blade there are two modules facing each other (root module and tip module) and each of them incorporates an abrupt change in thickness in the composite material in the area of the upper shell and another in the lower shell (or caps of the respective beams that run through the central part of the shells). Said laminate is very thick on its front face to accommodate the metal elements of the joint and its width narrows and its thickness decreases from the front face to the area of the original cap of the beam. Throughout this transition, an increase in height Δh occurs between the thicknesses of both pieces. The centroids of both pieces are not aligned, when pulling on the ends, the centroids tend to align and a moment M is created. This moment must be reacted by the laminate itself with loads perpendicular to it. When these loads are of relevant magnitude, as occurs in abrupt changes in thickness, they can cause out-of-plane movements to affect: (a) overlapping joints of the same laminate, (b) joints of the laminate of the beam flange with its web (web or vertical panel that typically supports the flanges of wind blade beams), (c) transverse joints of the cap with the rest of the shell, etc. In short, these loads, which are usually secondary, can cause the collapse of the structure because their great magnitude causes greater effects than those caused by the primary loads.

In the present invention, different load alignment solutions are described in the transition with the blade cap by incorporating materials on the mould face, alternatives to the basic solution of disproportionately increasing the slope of said transition.

These thickness transitions can be made by thickening the material of the cap panel, or by means of a transition through an overlap or similar between two laminates; the proposed solution is valid for both situations.

In the first transition the blade cap is placed with the usual slope of 1:100, assuming a very short reaction length of the load derived from the eccentricity.

In the second transition of the blade cap, the slope is increased until the reaction length is sufficient for the secondary loads to be admissible. This causes considerable structural excess thickness and therefore unnecessary overweight and extra costs.

In the third transition of the cap it is a double joint since both the end of the cap and the end of the preform end in a point and the joint will be a double overlap laminate that covers both points equally.

Finally, the solution proposed in the present invention is presented: adding a non-structural material to the mould face that allows modifying the centroid to increase the reaction length without the need to add structural material. This filling material can be cheap and light, like the foams common in the industry. If for other reasons such as inspectability it is desired that the material has a resin with behaviour similar to that of the structural laminate of the cap, laminates with a low elastic modulus could be added, such as mats, biaxial or 90° fibers, or cores with sufficient density to allow inspection using NDT methods (ultrasound, etc.). The last transition proposed as an alternative solution would be the modification of the aerodynamic surface of the blade and therefore of the face of the mould so that the variation of the centroid is smooth and also has sufficient length to react to the secondary loads.

**In** all of these mentioned joints, a geometric eccentricity occurs when the load acts on the centroid of the section, and since this is misaligned due to sections of different thickness, the distance from the centroid of a section to the load application line of the another (and vice versa) generates an eccentric load application that results in the appearance of a couple of forces that is added to the axial load flow in the cap section. To avoid this, a low elastic modulus laminate is added to the face of the mould that causes the centroid of the piece to rise progressively, aligning it and avoiding sudden variations thereof. These abrupt variations are especially critical near the joint zone, so it is especially advantageous to maintain a flat zone in the centroid distribution near the joint, which minimizes out-of-plane stresses in this zone.

The advantages are the reduction of material used in the transition of the modular blade joint area and the reduction of out-of-plane stresses and peeling stresses in adjacent areas (lap joints in the beam flange - cap, connection with beam webs and transverse joints with shell), the optimization of the use of material in the structure by eliminating these efforts, and the optimization of the use of adhesive and the structure of the web that joins the two spar caps of the upper and lower shells.

Another important advantage is inspectability; since it is a modular blade, the transition can be comfortably inspected from the inside of the blade.

The most relevant issue of this invention is that the application of the design techniques common in the state of the art could cause the collapse of the structure due to loads that are usually secondary (an order of magnitude smaller) and that are therefore not analysed with so much detail. This makes its detection and search for solutions very complex, which entails a great economic and time impact on the development of modular blades.

### Brief description of the drawings

A brief description will be given below for a series of drawings useful for better understanding the invention and that expressly relate to an embodiment of said invention that is presented as a non-limiting example thereof.
Figure 1 represents the section of a composite material showing the height jump due to the variation in its thickness.
Figure 2 represents a perspective view of the transition in the piece of a modular blade.
Figure 3 shows a perspective view with the overlapping joint of the cap reaching the top of the preform.
Figure 4 is a perspective view with a double overlapping joint between the cap and the preform.
Figure 5 shows section AA' of the previous figures, highlighting the variation in the thickness created.
Figure 6 shows the flattening of the thickness variation by adding extra laminate.
Figures 7a and 7b show the flattening of the thickness variation by adding a non-structural material and the moments that occur in the untreated and treated part.
Figure 8 shows the flattening of the thickness variation by modifying the aerodynamic surface compared to the centroid of an unmodified part.

### Detailed description

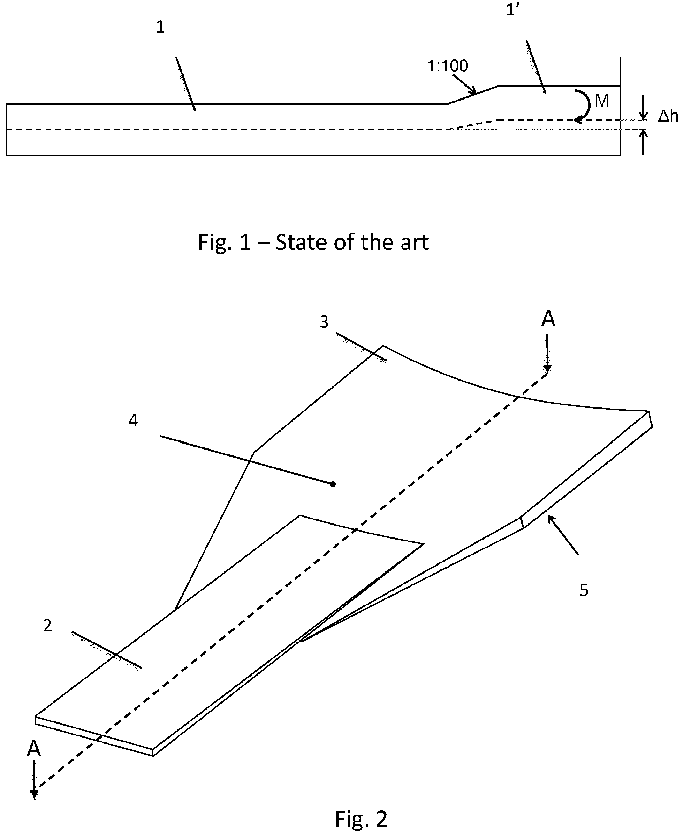

Figure 1 shows the transition of varying thicknesses of composite laminates. The most used transition in the state of the art raises a laminate of thickness (1) to a laminate of thickness (1'), which represents a transition of 1:100. The increase in height (Δh) produces a moment (M).

Figure 2 shows the specific embodiment of a modular blade. **In** this case it is an overlapping union of a cap (2) and a preform (3). But the object of the invention is also valid for manufacturing with a thickening of the cap without the need to use a preform. The laminate of this union has a pocket face (4) which is the face of the laminate towards the interior of the blade and a mould face (5) which is the aerodynamic surface of the blade.

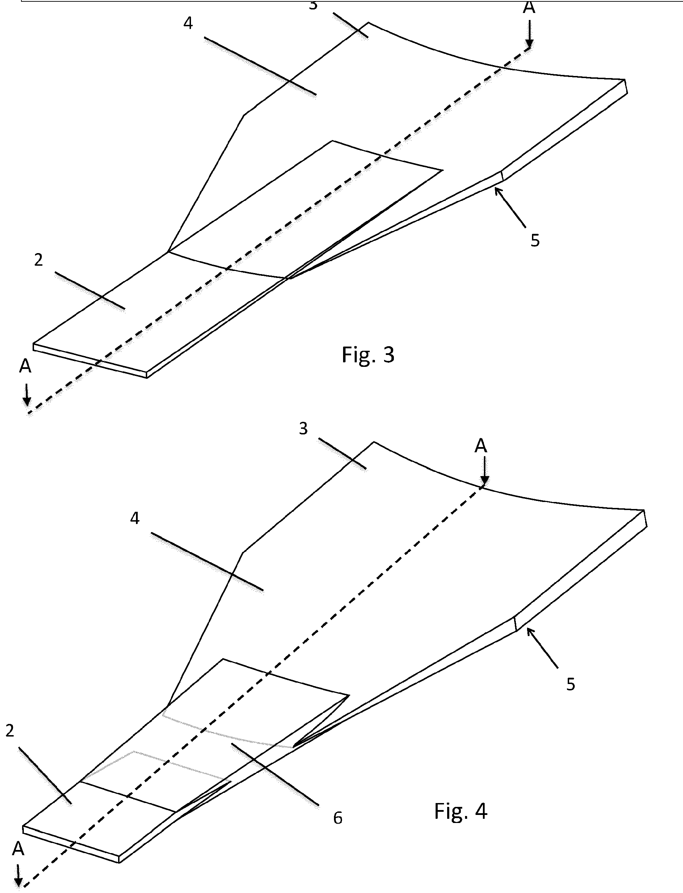

Figure 3 shows how the overlapping joint, the cap (2) of the blade overlaps the bag face (4) on the preform (3), reaching the line where it changes to the thick thickness of the joint area.

Figure 4 shows the double overlapping joint (6) between the cap (2) and the preform (3).

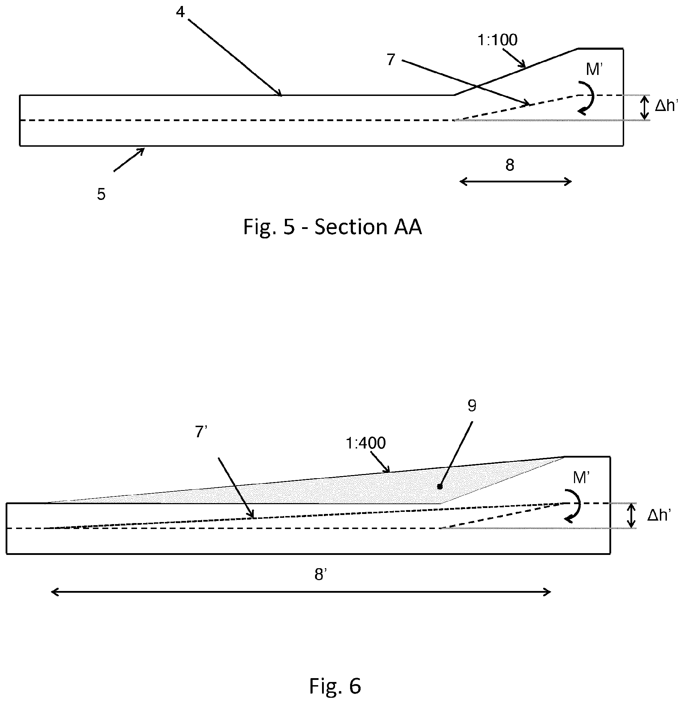

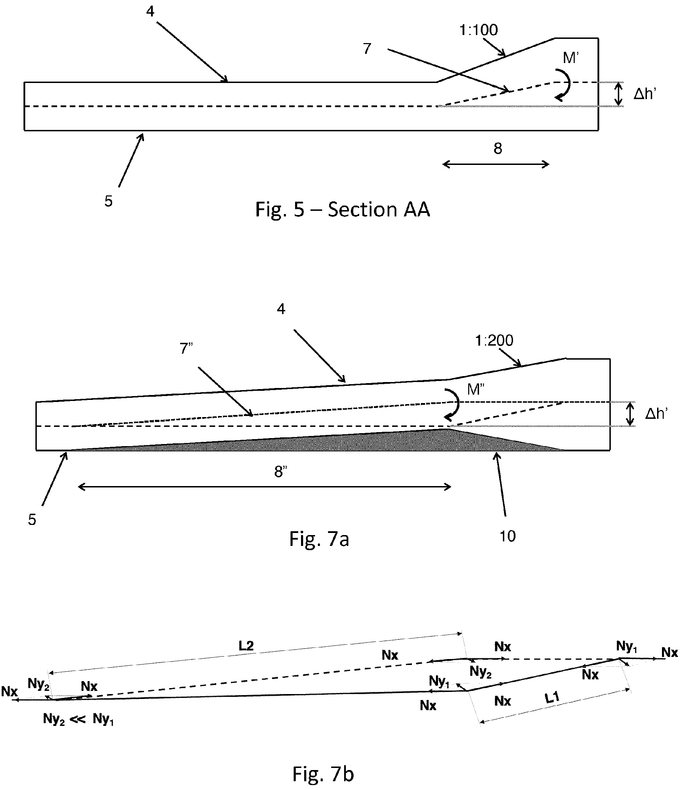

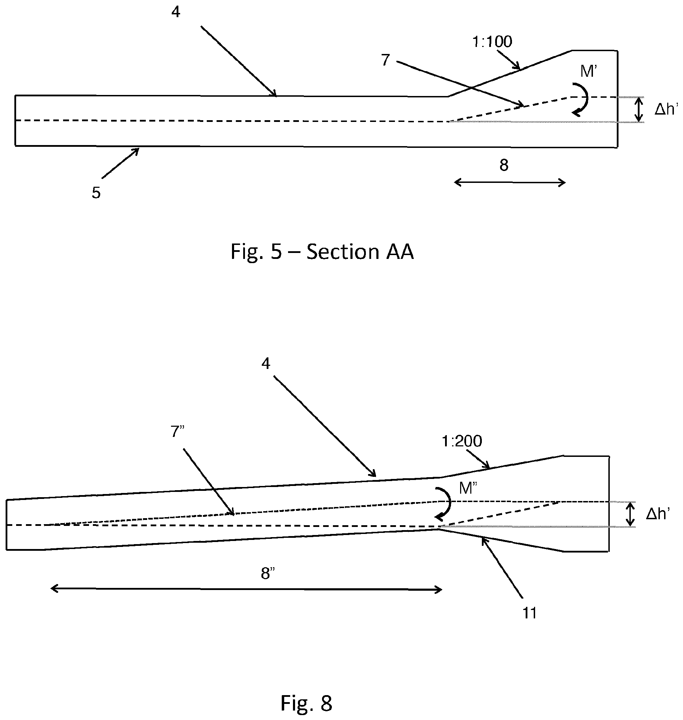

When performing section AA on any of the previous practical embodiments, Figure 5 is obtained, which shows the bag face (4), the mould face (5) and the centroid line (7) drawn in a dashed line. The new increase in height (Δh') produces a moment (M') indicating a reaction zone (8)

As shown in Figure 6, if the entire section shown is covered with a covering layer (9) the distribution of the centroid (7') is improved, but it is not enough to eliminate the eccentricity effect completely. The new cover layer (9) presents a transition of 1:400 and the new reaction zone (8') is considerably expanded.

Figure 7a shows how when adding a non-structural material (10) to the mould face (5), the centroid (7") is softened and the reaction zone (8") narrows. On the other hand, the transition changes to 1:200.

The non-structural material (10) is a low elastic modulus laminate or a foam core, balsa wood or similar.

The non-structural material (10) covers the entire width of the base of the preform, and its elevation cut can be triangular or trapezoidal to provide the centroid elevation required to avoid geometric misalignment.

The non-structural material (10) can be incorporated into the laminate as a pre-cured or fresh laminate in case of using low modulus laminates or as the first layer of the prefabricated stack in case of non-structural materials such as foam, balsa wood or similar.

Figure 7b shows the normal forces N. The graph compares the distribution of centroids for the case that the increase in thickness (3) incorporates a non-structural material (10) in its lower part in a dotted line or for the case of that does not incorporate it in a dashed line. Nx is the stress in the cap and if it is multiplied by Δh it provides the moment M. These loads Nx, when reacting with the Dh of the joint, generate the out-of-plane loads Ny. By reacting in a larger reaction zone of 8" (versus 8) the out-of-plane stresses are reduced.

Figure 8 shows a second embodiment of the invention where a new aerodynamic surface (11) is laminated that includes the same advantages as the previous embodiment.

## Claims

1. A wind turbine modular blade comprising a composite laminate, wherein:
- the composite material laminate presents a longitudinal thickness transition in the blade joint region, configured as an adaptation slope between the original thickness of the blade panel and the thickness required to integrate the joint, thereby absorbing the thickness difference between both areas, and
- the composite material incorporates a laminate/core of non-structural material (10) arranged at the bottom of the blade joint piece, on the mold face (5), the arrangement of which aligns the centroid position of the laminate between the original region of the blade panel and the joint integration zone, reducing geometric gradients that generate unwanted stress concentrations.

2. A wind turbine modular blade according to claim 1 comprising a transition of variable thicknesses of composite laminates wherein the non-structural material (10) is a laminate of low elastic modulus (biaxial or unidirectional at 90°) or a core made of foam, wood raft or similar.

3. A wind turbine modular blade according to claim 1 comprising a transition of variable thicknesses of composite material laminates wherein the non-structural material (10) covers the entire width of the base of the treated composite material, and its vertical cut can be triangular or trapezoidal to achieve elevation of the centroid.

4. A wind turbine modular blade according to claim 1 comprising a_transition of variable thicknesses of composite laminates wherein the non-structural material (10) is incorporated into the laminate as a pre-cured or fresh laminate in case of using low modulus laminates.

5. A wind turbine modular blade according to claim 4 comprising a transition of variable thicknesses of composite material laminates wherein the non-structural material (10) is incorporated as one of the first layers of the prefabricated stack in the case of foam core, wood raft, or similar.

6. A wind turbine modular blade according to claim 1 comprising a transition of variable thicknesses of composite material laminates wherein the area corresponding to the non-structural material (10) is obtained by modifying the aerodynamic surface of the blade, without adding additional material.

7. A wind turbine modular blade according to claim 1 comprising a_transition of variable thicknesses of composite material laminates wherein the interior structure of the blade, and specifically the bond lines, is inspectable both from inside the joint and from outside because it has the non-structural material (10) has a sufficient density for the ultrasounds to pass through.

## Patentansprüche

1. Modulares Rotorblatt für eine Windkraftanlage, umfassend einen Verbundwerkstofflaminat, **dadurch gekennzeichnet, dass**:
- das Verbundlaminat im Bereich der Blattverbindung einen longitudinalen Dickenübergang aufweist, welcher als Anpassungsgefälle zwischen der ursprünglichen Dicke des Blatpanels und der zur Integration der Verbindung erforderlichen Dicke ausgebildet ist, wodurch der Dickenunterschied zwischen beiden Bereichen aufgenommen wird, und
- das Verbundmaterial ein Laminat/Kern aus nicht-strukturellem Material (10) enthält, das am unteren Teil des Verbindungsstücks des Blatts, auf der Formseite (5), angeordnet ist, wobei diese Anordnung die Lage des Schwerpunkts des Laminats zwischen dem ursprünglichen Bereich des Blatpanels und dem Verbindungsbereich ausrichtet und geometrische Gradienten verringert, die unerwünschte Spannungs-konzentrationen verursachen.

2. Modulares Rotorblatt nach Anspruch 1 mit einem Dickenübergang aus variablen Lagenstärken des Verbundlaminats, wobei das nicht-strukturelle Material (10) ein Laminat mit niedrigem Elastizitätsmodul (biaxial oder unidirektional bei 90º) oder ein Kern aus Schaumstoff, Balsaholz oder ähnlichem ist.

3. Modulares Rotorblatt nach Anspruch 1 mit einem Dickenübergang aus variablen Lagenstärken des Verbundmaterials, wobei das nicht-strukturelle Material (10) die gesamte Breite der Basis des behandelten Verbundmaterials abdeckt und dessen vertikaler Schnitt dreieckig oder trapezförmig ausgebildet sein kann, um den Schwerpunkt anzuheben.

4. Modulares Rotorblatt nach Anspruch 1 mit einem Dickenübergang aus variablen Lagenstärken des Verbundmaterials, wobei das nicht-strukturelle Material (10) als vorgehärtetes oder frisches Laminat in das Laminat integriert ist, im Fall der Verwendung von Laminaten mit niedrigem Modul.

5. Modulares Rotorblatt nach Anspruch 4 mit einem Dickenübergang aus variablen Lagenstärken des Verbundmaterials, wobei das nicht-strukturelle Material (10) als eine der ersten Lagen des vorgefertigten Laminatpakets eingebracht ist, im Fall eines Schaumkerns, Balsaholzes oder ähnlichem.

6. Modulares Rotorblatt nach Anspruch 1 mit einem Dickenübergang aus variablen Lagenstärken des Verbundmaterials, wobei der Bereich des nicht-strukturellen Materials (10) durch Modifikation der aerodynamischen Oberfläche des Blatts erzielt wird, ohne zusätzliches Material hinzuzufügen.

7. Modulares Rotorblatt nach Anspruch 1 mit einem Dickenübergang aus variablen Lagenstärken des Verbundmaterials, wobei die innere Struktur des Blatts, insbesondere die Klebefugen, sowohl von innen als auch von außen inspizierbar ist, da das nicht-strukturelle Material (10) eine ausreichende Dichte für die Durchlässigkeit von Ultraschall aufweist.

## Revendications

1. Pale modulaire d'éolienne comprenant un stratifié composite, **caractérisée en ce que**:
- le stratifié de matériau composite présente une transition d'épaisseur longitudinale dans la zone de jonction de la pale, configurée sous forme d'une pente d'adaptation entre l'épaisseur d'origine du panneau de pale et l'épaisseur requise pour intégrer la jonction, absorbant ainsi la différence d'épaisseur entre les deux zones, et
- le matériau composite incorpore un stratifié/âme de matériau non structurel (10) disposé au fond de la pièce de jonction de la pale, sur la face du moule (5), dont la disposition aligne la position du centroïde du stratifié entre la zone d'origine du panneau de pale et la zone d'intégration de la jonction, réduisant les gradients géométriques générateurs de concentrations de contraintes indésirables.

2. Pale modulaire d'éolienne selon la revendication 1, comprenant une transition d'épaisseurs variables des stratifiés composites, dans laquelle le matériau non structurel (10) est un stratifié à faible module d'élasticité (biaxial ou unidirectionnel à 90º) ou une âme en mousse, bois balsa ou similaire.

3. Pale modulaire d'éolienne selon la revendication 1, comprenant une transition d'épaisseurs variables des stratifiés composites, dans laquelle le matériau non structurel (10) recouvre toute la largeur de la base du matériau composite traité, et dont la coupe verticale peut être triangulaire ou trapézoïdale pour élever le centroïde.

4. Pale modulaire d'éolienne selon la revendication 1, comprenant une transition d'épaisseurs variables des stratifiés composites, dans laquelle le matériau non structurel (10) est incorporé dans le stratifié sous forme de stratifié précuit ou frais dans le cas de l'utilisation de stratifiés à faible module.

5. Pale modulaire d'éolienne selon la revendication 4, comprenant une transition d'épaisseurs variables des stratifiés composites, dans laquelle le matériau non structurel (10) est incorporé comme l'une des premières couches de l'empilement préfabriqué dans le cas d'une âme en mousse, bois balsa ou similaire.

6. Pale modulaire d'éolienne selon la revendication 1, comprenant une transition d'épaisseurs variables des stratifiés composites, dans laquelle la zone correspondant au matériau non structurel (10) est obtenue par modification de la surface aérodynamique de la pale, sans ajout de matériau supplémentaire.

7. Pale modulaire d'éolienne selon la revendication 1, comprenant une transition d'épaisseurs variables des stratifiés composites, dans laquelle la structure intérieure de la pale, et en particulier les lignes de collage, est inspectable à la fois de l'intérieur et de l'extérieur de la jonction, car le matériau non structurel (10) a une densité suffisante pour permettre le passage des ultrasons.
